(19) Europäisches Patentamt
European Patent Office
Office européen des brevets

(11) Veröffentlichungsnummer: **0 073 362**
**B1**

(12) # EUROPÄISCHE PATENTSCHRIFT

(45) Veröffentlichungstag der Patentschrift: **29.10.86**

(51) Int. Cl.[4]: **C 09 D 3/82**

(21) Anmeldenummer: **82107117.2**

(22) Anmeldetag: **06.08.82**

(54) **Wasserhaltige Beschichtungsmittel auf Silikonharzbasis für Kunststoffoberflächen.**

(30) Priorität: **02.09.81 DE 3134777**

(43) Veröffentlichungstag der Anmeldung:
**09.03.83 Patentblatt 83/10**

(45) Bekanntmachung des Hinweises auf die Patenterteilung:
**29.10.86 Patentblatt 86/44**

(84) Benannte Vertragsstaaten:
**DE FR GB IT**

(56) Entgegenhaltungen:
**DE - A - 3 021 018**
**DE - A - 3 144 652**
**DE - B - 1 233 593**
**DE - C - 1 087 350**
**GB - A - 1 202 686**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1 (DE)**

(72) Erfinder: **Liebler, Ralf, Dr., Alfred-Messel-Weg 14, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft Beschichtungsmittel für Kunststoffoberflächen auf Silikonharzbasis in wässrig-organischer Lösung, die eine besonders hohe Lagerstabilität besitzen. Die Kondensationsprodukte von partiell hydrolysierten siliciumorganischen Verbindungen stellen wertvolle Beschichtungsmittel der Technik dar. Es war bereits Stand der Technik, derartige Kondensationsprodukte aus den unter Säurekatalyse erhaltenen, hydrolysierten Silanen zu gewinnen.

Aus der US-PS 4 223 121 ist ein verbessertes Verfahren zur Herstellung von Organopolysiloxanen bekannt, bei dem Trialkoxysilane in einer wässrigen Lösung, in einem Verhältnis entsprechend mindestens der zur Hydrolyse benötigten stöchiometrischen Wassermenge bis zu einem Verhältnis Wasser zu Silan von ca. 10, bei saurem pH hydrolysiert und die Lösung auf erhöhte Temperatur gebracht werden, um das hydrolysierte Silan zu einem Organopolysiloxan zu kondensieren, wobei die Verbesserung in der Verwendung von Ameisensäure im Bereich ca. 4800 bis ca. 300 000 ppm zur Einstellung des sauren pH-Werts besteht. Derartige Kondensationsprodukte werden bevorzugt zur Beschichtung von Glas und Kunststoffoberflächen verwendet.

Nach dieser Patentschrift gestattet die Verwendung von Ameisensäure die Anwendung wesentlich höherer Säurekonzentrationen ($>$ 700 ppm) bei der Hydrolyse am Anfang des Verfahrens als man bis dahin für möglich hielt. Bei Anwendung des nächsthöheren Homologen, der Essigsäure, gehen die Vorteile bereits wieder verloren.

Aus der zeitlich früheren DE-PS 2 522 241 war die Verwendung von 5 bis 30 Gew.-% an Essigsäure zur Hydrolyse der aus vier verschiedenen Komponenten bestehenden Siloxane bekannt, wobei erfindungsgemäss die Topfzeit der auf diesem Wege erhaltenen Überzugsmittel durch einen Zusatz von Alkali- und/oder Zinksalzen der Naphthensäuren als Katalysatoren entscheidend verbessert wird.

Gemäss der US-PS 4 006 271 wird im Zuge eines Herstellungsverfahrens von Beschichtungsmassen für Polycarbonat die Hydrolyse von Alkyltri-niederalkoxysilanen mit verdünnten Mineralsäuren oder Essigsäure durchgeführt, wobei Lösungen der Teilhydrolysate in einem wassermischbaren flüchtigen, organischen Lösungsmittel, die ca. 0,1 bis ca. 20 Gew.-% eines Verstärkers der Kratzfestwirkung vom Typ der Aminoalkyltrialkoxysilane und mindestens 0,05 Teile einer stabilisierenden schwachen Säure (wie Essigsäure) pro Teil des Verstärkers der Kratzfestbeschichtung enthalten, zur Anwendung kommen.

Nach der Lehre dieses US-Patents sind Säuren mit einem pka-Wert $> 5 \times 10^{-3}$ zu stark zum vorgesehenen Zweck, während Säuren mit einem pka-Wert $< 5 \times 10^{-5}$ als zu schwach betrachtet werden.

Aus der JP-OS 7 885 874 (Chem. Abstr. 90, 24888e) ist ein Verfahren zur Beschichtung von Plastik-Linsen bekannt, bei dem u.a. Triethoxymethylsilan in Gegenwart von Zink-Naphthenat, Pivalinsäure und oberflächenaktiven Agentien der Partial-Hydrolyse unterworfen wird. Ebenfalls zur Beschichtung von Linsen sind in der JP-OS 78 144 959 (Chem. Abstr. 90, 153570 u. 153570) partiell hydrolysierte Alkyltrialkoxysilane herangezogen worden, bei deren Hydrolyse Ammoniumhydroxid oder die Salze des Ammoniumhydroxids mit $C_1$ bis $C_5$-Fettsäuren und oberflächenaktive Agentien verwendet wurden.

Weiter sind aus der JP-OS 77 152 439 (Chem. Abstr. 88, 154 503v) Überzugsmittel aus partiell hydrolysierten Alkyltrialkoxysilanen bekannt. Die partiell hydrolysierten Kondensate sollen zur Verbesserung ihrer Lagerungsfähigkeit $C_5$-Carbonsäuren bei einem pH zwischen 3 und 6 enthalten. Beispielhaft genannt wird z.B. ein partielles Hydrolysat aus Trimethoxymethylsilan in Ethanol, das mit Natriumacetat, Essigester, Ethanol und Trimethylessigsäure gemischt wird und das eine Topfzeit von über einem Monat besitzen soll.

Die Lehre der GB-A 1 202 626 betrifft die Beschichtung von Papier. Bei der Papierbeschichtung liegen die für kondensationsvernetzende Beschichtungssysteme auf Siloxanbasis benötigten Topfzeiten bei 12–24 Stunden, d. h. die vordringlich zu lösende Aufgabe, ausreichende Topfzeiten für die Beschichtung von Kunststoffen zu schaffen, wird weder gestellt noch werden Lösungswege angegeben.

Durch Zusatz von $C_{10}$–$C_{20}$-Carbonsäuren, wie sie diese Druckschrift empfiehlt, speziell mit der bevorzugten $C_{18}$-Carbonsäure werden eindeutig schlechtere Ergebnisse erzielt als mit der erfindungsgemässen Lösung. Die GB-A 1 202 626 konnte somit die vorliegende Lehre nicht nahelegen.

Die Mittel und Verfahren des Standes der Technik konnten jedoch nicht völlig befriedigen. Es hat sich in der Praxis gezeigt, dass die Überzugsmischungen des Standes der Technik in der Regel bereits nach kürzerer Lagerzeit nicht mehr genügend aushärtbar sind, mit der Folge, dass die damit hergestellten Beschichtungen den herrschenden Anforderungen an die Kratzbeständigkeit nicht genügen.

Es wurde nun gefunden, dass die Kondensationsprodukte aus partiell hydrolysierten siliciumorganischen Verbindungen im Sinne der Anwendung als Beschichtungsmittel für Kunststoffoberflächen wesentlich verbessert werden können, wenn diese nichtcyclische Alkancarbonsäuren mit 8 Kohlenstoffatomen im Molekül enthalten, wie die Octansäure, 2-Ethylhexansäure bzw. deren Isomeren.

Zur Herstellung der erfindungsgemässen Beschichtungsmittel eignen sich die aus dem Stand der Technik bekannten siliciumorganischen Verbindungen, wie Alkyltrialkoxysilane, Dialkyldialkoxysilane und die einschlägig verwendeten, aromatisch substituierten Silane sowie die einschlägig verwendeten funktionell substituierten siliciumorganischen Verbindungen. Genannt seien z.B. die Verbindungen der Formel I

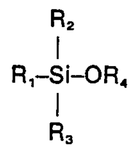

I

worin $R_1$, $R_2$ und $R_3$ unabhängig voneinander für einen Rest $-(O)_nR_5$ stehen, wobei $R_4$ und $R_5$ einen Alkylrest mit 1 bis 5 Kohlenstoffatomen oder einen Vinylrest oder Allylrest oder einen Phenylrest, vorzugsweise einen Methyl- oder einen Äthylrest und n Null oder eins bedeuten, oder worin $R_4$ und/oder $R_5$ für einen Rest $H[NH-(CH_2)_{m'}]_p - NH(CH_2)_m -$ stehen, wobei m und m' für eine Zahl von 1 bis 6, und p für null oder eins steht oder worin $R_4$ und/oder $R_5$ für einen Rest

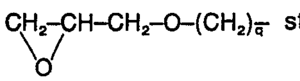 stehen,

worin q für eine Zahl von 1 bis 6 steht oder $R_4$ und/oder $R_5$ für einen Rest

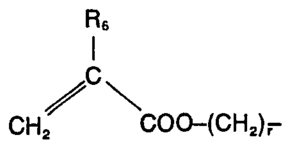 steht,

worin $R_6$ Wasserstoff oder Methyl und r eine Zahl von 1 bis 6 bedeutet.

Die erfindungsgemässen, wasserhaltigen Beschichtungsmittel werden dargestellt, indem man die siliciumorganischen Verbindungen, insbesondere die Verbindungen der Formel I mit einer zur Hydrolyse ausreichenden Menge Wasser, d.h. $\geqslant$ 0,5 Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäure, Salpetersäure usw. oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3, liegt. Im allgemeinen zeigt sich nach dem Zusammengeben der Reaktionspartner ein Temperaturanstieg. In gewissen Fällen kann es notwendig werden zum Anspringen der Reaktion von aussen Wärme zuzuführen, beispielsweise durch Erwärmen des Ansatzes auf 40–50 °C. Zweckmässigerweise wird darauf geachtet, dass die Reaktionstemperatur 55 °C nicht überschreitet. Die Reaktionsdauer ist im allgemeinen relativ kurz, sie liegt im allgemeinen unter einer Stunde, beispielsweise bei 45 min. Zur Aufarbeitung kann zweckmässigerweise ein Teil des Wasser-Alkoholgemisches und der flüchtigen Säuren im Vakuum abgezogen werden. Anschliessend kann mit geeigneten organischen Lösungsmitteln, wie z.B. Alkoholen wie Ethanol, Methanol, Isopropanol, n-Butanol, Ethern, wie Diethylether, Dioxan, Ethern und Estern von Polyolen, wie z.B. Ethylenglykol, Propylenglykol sowie den Ether-Estern dieser Verbindungen, Kohlenwasserstoffen, z.B. aromatischen Kohlenwasserstoffen, Ketonen, wie Aceton, Methylethylketon, der Feststoffgehalt auf ca. 15–35 Gew.-% (berechnet als $SiO_2$) eingestellt werden. Besonders bevorzugt sind als Lösungsmittel z.B. $C_3$- und $C_4$-Alkohole und Ethylglykol. Es hat sich ferner als vorteilhaft erwiesen, den Mitteln solche Lösungsmittel zuzusetzen, die normalerweise den als Substrat der Beschichtung vorgesehenen Kunststoff anlösen. Im Falle von Polymethylmethacrylat (PMMA) als Substrat, empfiehlt sich beispielsweise ein Zusatz von Lösungsmitteln, wie Toluol, Aceton, Tetrahydrofuran in Mengen, die 2 bis 20%, bezogen auf das Gesamtgewicht der Lösungsmittel, ausmachen. Der Wassergehalt der erfindungsgemässen Beschichtungsmittel wird im allgemeinen auf 5–20 Gew.-%, vorzugsweise auf 13 $\pm$ 2 Gew.-%, bezogen auf das Gesamtgewicht der Mittel, eingestellt. Falls der Zusatz der höheren Carbonsäuren gemäss der oben angegebenen Definition nicht bereits zum Zweck der Hydrolyse geschehen war, setzt man erfindungsgemäss dem Mittel vor der Lagerung eine oder mehrere höhere Carbonsäuren in solchen Mengen zu, dass 0,01–1 Mol der höheren Carbonsäure, vorzugsweise 0,05–0,2 Mol, speziell 0,1 bis 0,15 Mol auf ein Mol eingesetztes Silan kommen.

Der pH-Wert der erfindungsgemässen wasserhaltigen Beschichtungsmittel sollte im Bereich von 3–6 liegen, bevorzugt zwischen 4,5 und 5. Es hat sich erwiesen, dass innerhalb dieses Bereichs die Kondensation während der Lagerung besonders gering ist. Die Einstellung des pH-Bereichs kann in an sich bekannter Weise, beispielsweise durch Zugabe geeigneter Basen, wie Alkali-, Erdalkali- oder Ammoniumhydroxid, gegebenenfalls in alkoholischer Lösung oder entsprechender Salze schwacher Säuren, wie der Carbonate, Acetate bzw. Pufferlösungen vorgenommen werden.

Vorteilhafterweise werden den erfindungsgemässen Beschichtungsmitteln Härtungskatalysatoren, beispielsweise in Form von Zinkverbindungen und/oder anderer Metallverbindungen, wie Kobalt-, Kupfer- oder Calciumverbindungen, zugesetzt.

Der Anteil der Härtungskatalysatoren beträgt in der Regel 0,1–2 Gew.-%, bezogen auf das gesamte Mittel. Genannt seien beispielsweise Zinknaphthenat, -octoat, -acetat, -sulfat usw.

Die so erhaltenen Beschichtungsmittel besitzen bei hervorragender Lagerungsfähigkeit besonders gute Härtungscharakteristiken. Sie lassen sich z.B. in relativ kurzer Zeit, beispielsweise innerhalb 4 bis 6 Stunden, in der Regel bei ca. 5 Stunden und bei vergleichsweise niedriger Temperatur, beispielsweise bei 90–110 °C, vorzugsweise bei ca. 100 °C, zu hervorragend kratz- und haftfesten Beschichtungen aushärten.

Die erfindungsgemässen Mittel eignen sich zur Beschichtung von festen Kunststoffoberflächen, wie von glasartigen Substraten, insbesondere der Polymerkunststoffe auf Acrylharzbasis, wie Polymethylmethacrylat und der verschiedenen Modifikationen, Polycarbonat, Melaminformaldehydhar-

zen, Polystyrol, Polyvinylchlorid, Polyäthylen, Polypropylen, Tetrafluoräthylene u.ä. Das zweckmässige Überzugsgewicht hängt innerhalb gewisser Grenzen von dem zu beschichtenden Substrat ab. Im allgemeinen beträgt das Überzugsgewicht, ausgedrückt als Feststoffgewicht, 2 bis 6 g/m². Die Schichtdicken liegen in der Regel von 0,25 bis 25 µm.

Das Überziehen der Substrate kann z.B. durch Tauchen und kontrolliertes Aus-der-Lösungziehen der zu beschichtenden Oberflächen geschehen.

Das Herausziehen kann z.B. mit einer Geschwindigkeit von 10 bis 40 cm/min erfolgen. Weiter sind Beschichtungsverfahren, wie Sprüh-, Strömungs- oder Wirbelschichtauftrag anwendbar. Die derart beschichteten Substratkörper werden in geeigneter Weise gehärtet, vorzugsweise durch Tempern bei erhöhter Temperatur, im allgemeinen bei 80–100 °C während 2 bis 6 Stunden, vorzugsweise während ca. 5 Stunden im Trockenofen. Die erfindungsgemässen Beschichtungsmittel behalten die positiv zu wertenden Eigenschaften analoger Mittel des Standes der Technik bei. Sie können auch die aus dem Stand der Technik bekannten Zusätze, wie UV-Absorptionsmittel, Farbstoffe, Pigmente, Antistatika, Antioxidantien, Netzmittel, Antischaummittel, Antifoulingzusätze u.ä. in den einschlägig bekannten Mengen enthalten. Die mit den erfindungsgemässen Mitteln beschichteten Oberflächen lassen sich leicht reinigen.

Die durch Anwendung der erfindungsgemässen Beschichtungsmittel erreichten Oberflächenbeschichtungen zeichnen sich durch eine äusserst hohe Kratzfestigkeit, hohe Haftfestigkeit, Dauerhaftigkeit, Hitzebeständigkeit, Beständigkeit gegen Haarrissbildung, Glanz, optische Einheitlichkeit, Beständigkeit gegen Feuchtigkeit und Lösungsmittel u.ä. aus.

Hervorzuheben ist die ausserordentlich günstige Lagerstabilität der erfindungsgemässen Beschichtungsmittel. Sie beträgt in der Regel > 16 d bei 30 °C-Lagerung.

Die folgenden Beispiele dienen zur Erläuterung der Erfindung.

## A. Testmethoden

Zur Beschleunigung der Lagerstabilitätstests werden die Ansätze bei 30 °C gelagert. Nach erfolgter Tauchbeschichtung härtet man 5 Stunden bei 100 °C aus.

Die Prüfung auf Kratzfestigkeit erfolgt durch Reiben mit Stahlwolle 00. Die Haftung wird mittels des Gitterschnitt-Tests nach DIN 53 151 ermittelt.

## Beispiel 1 bis 3

Grundsatz:

Eine Mischung von 300 g Methyltriethoxysilan, 136 g Wasser und 28 g 2-Ethylhexansäure wird unter Rühren auf ~ 50 °C erwärmt, bis exotherme Reaktion eintritt. Die Temperatur wird durch Kühlung unter 55 °C gehalten. Nach ¾ h entfernt man im Vakuum 198 g des Ethanol/Wasser-Gemisches, verdünnt den Rückstand mit 73 g n-Butylalkohol, 11 g Ethylglykol und 7 g Toluol und stellt den Wassergehalt auf 13% ein. Nach Zugabe von 8 g einer 3,5%igen methanolischen Kaliumhydroxid-Lösung wird der Ansatz geteilt: Je 112 g Lack versetzt man mit

Beispiel 1) 0,55 g Zinkoctoat

Beispiel 2) 0,45 g $ZnSO_4 \cdot 7\,H_2O$

Die Aushärtbarkeit der Lacke bleibt während der 30 °C-Lagerung bei Beispiel 1) 18 Tage, bei Beispiel 2) 22 Tage erhalten. Die Haftung auf PMMA ist in beiden Fällen über diesen Zeitraum hinaus hervorragend. Beispiel 3). In einem Vergleichsversuch wird an Stelle von 2-Ethylhexansäure Essigsäure verwendet. Mit Zinkoctoat bleibt die Aushärtbarkeit während der 30 °C-Lagerung max. 7 Tage erhalten.

## Beispiel 4 bis 7

1000 g Methyltriethoxysilan, 454 g Wasser und 50 g stark saurer Ionenaustauscher (Bayer Lewatit® SC 102) werden bis zum Anspringen der exothermen Reaktion unter Rühren auf 40 °C erwärmt. Die Temperatur wird anschliessend durch Kühlung unter 50 °C gehalten. Die Hydrolyse ist nach ca. ~ 1 h beendet. Nach Abziehen von 663 g Ethanol/Wasser-Gemisch im Vakuum verdünnt man den Rückstand mit 242 g n-Butylalkohol, 37 g Ethylglykol und 24 g Toluol und gibt eine Mischung aus 50 g 2-Ethylhexansäure und 44 g Octansäure zu. Der Wassergehalt wird auf 16% eingestellt. Man filtriert schliesslich den Ionenaustauscher ab, versetzt mit 32 g einer 3,5%igen methanolischen Kaliumhydroxid-Lösung und teilt den Ansatz in 130 g-Portionen auf, die mit verschiedenen Zn-Verbindungen versetzt werden. Die Ergebnisse sind in der folgenden Tabelle zusammengefasst:

| Ansatz | Härtungskatalysator | Lack zu kratzfesten Beschichtungen aushärtbar während [d 30° C-Lagerung] | gute Haftung während [d 30° C-Lagerung] |
|---|---|---|---|
| Beispiel 4 | 0,65 g Zn-octoat | 17 | 19 |
| Beispiel 5 | 0,49 g Zn-acetyl-acetonat | 16 | >19 |
| Beispiel 6 | 0,53 g $ZnSo_4 \cdot 7\ H_2O$ | 17 | >19 |
| Beispiel 7 | 0,42 g Zn-hydroxid-carbonat | 19 | >19 |

Ähnlich günstige Ergebnisse wurden auch mit anderen, einschlägig verwendeten Testmethoden erzielt, z.B. der Taber-Abriebmethode (ASTM D 1044) dem Sandrieselverfahren (DIN 52 348 E).

## Patentansprüche

1. Wasserhaltiges Beschichtungsmittel auf Silikonharzbasis für Kunststoffoberflächen mit verbesserter Lagerstabilität, hergestellt durch Kondensation partiell hydrolysierter siliciumorganischer Verbindungen in Gegenwart von Säuren, dadurch gekennzeichnet, dass das Beschichtungsmittel eine nichtcyclische Alkancarbonsäure mit 8 Kohlenstoffatomen im Molekül enthält.

2. Beschichtungsmittel gemäss Anspruch 1, dadurch gekennzeichnet, dass 0,01 bis 1 Mol, vorzugsweise 0,05 bis 0,2 Mol, der nichtcyclischen Alkancarbonsäure mit 8 Kohlenstoffatomen im Molekül auf ein Mol der eingesetzten siliciumorganischen Verbindung eingesetzt werden.

3. Beschichtungsmittel gemäss den Ansprüchen 1 und 2, dadurch gekennzeichnet, dass als siliciumorganische Verbindungen die Verbindungen der Formel I

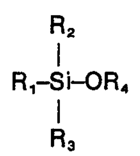 (I)

worin $R_1$, $R_2$ und $R_3$ unabhängig voneinander für einen Rest $-(O)_nR_5$ stehen, wobei $R_4$ und $R_5$ einen Alkylrest mit 1 bis 5 Kohlenstoffatomen, einen Vinylrest oder Allylrest oder einen Phenylrest, vorzugsweise einen Methyl- oder einen Äthylrest und n Null oder eins bedeuten, oder worin $R_4$ und/oder $R_5$ für einen Rest $H\ [NH-(CH_2)_{m'}]_p-NH\ (CH_2)_m-$ stehen, wobei m und m' für eine Zahl von 1 bis 6, und p für null oder eins steht oder worin $R_4$ und/oder $R_5$ für einen Rest

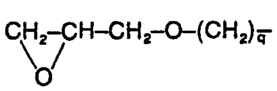 stehen,

worin q für eine Zahl von 1 bis 6 steht oder $R_4$ und/oder $R_5$ für einen Rest

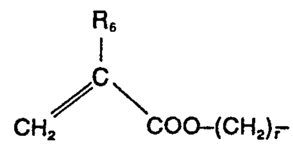 steht,

worin $R_6$ Wasserstoff oder Methyl und r eine Zahl von 1 bis 6 bedeutet, verwendet werden.

4. Beschichtungsmittel gemäss den Ansprüchen 1 bis 3, dadurch gekennzeichnet, dass die partielle Hydrolyse der siliciumorganischen Verbindungen in Gegenwart einer nichtcyclischen Alkancarbonsäure mit 8 Kohlenstoffatomen im Molekül durchgeführt worden war.

5. Beschichtungsmittel gemäss den Ansprüchen 1 bis 3, dadurch gekennzeichnet, dass die nichtcyclische Alkancarbonsäure mit 8 Kohlenstoffatomen im Molekül vor der Lagerung zugesetzt wird.

6. Beschichtungsmittel gemäss den Ansprüchen 1 bis 5, dadurch gekennzeichnet, dass zur partiellen Hydrolyse der siliciumorganischen Verbindungen $\geqslant 0,5$ Mol Wasser pro Mol der zur Hydrolyse vorgesehenen Gruppe verwendet worden war.

7. Beschichtungsmittel gemäss den Ansprüchen 1 bis 6, dadurch gekennzeichnet, dass der Wassergehalt 5–20 Gew.-%, vorzugsweise 13 $\pm$ 2 Gew.-% beträgt.

8. Beschichtungsmittel gemäss den Ansprüchen 1 bis 7, dadurch gekennzeichnet, dass sie geeignete, organische Lösungsmittel in solchen Anteilen enthalten, dass der Feststoffgehalt der Mittel ca. 15–35 Gew.-% beträgt.

9. Verwendung der Beschichtungsmittel gemäss den Ansprüchen 1 bis 9, zur Beschichtung von Acrylharzkunststoffen.

10. Verwendung der Beschichtungsmittel gemäss Anspruch 10, zur Beschichtung von Polymethylmethacrylat.

11. Verwendung der Beschichtungsmittel gemäss den Ansprüchen 1 bis 9, zur Beschichtung von Polycarbonat.

**Claims**

1. Aqueous coating agent based on silicon resin for plastics surfaces having improved storage qualities, prepared by the condensation of partially hydrolysed organic silicon compounds in the presence of acids, characterised in that the coating agent contains a non-cyclic alkanecarboxylic acid with 8 carbon atoms in the molecule.

2. Coating agent as claimed in claim 1, characterised in that 0.01 to 1 mol, preferably 0.05 to 0.2 mol, of the non-cyclic alkanecarboxylic acid with 8 carbon atoms in the molecule are used per mole of organic silicon compound used.

3. Coating agent as claimed in claims 1 and 2, characterised in that the organic silicon compounds used are the compounds of formula I

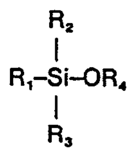 I

wherein $R_1$, $R_2$ and $R_3$ independently of one another represent a group $-(O)_nR_5$, whilst $R_4$ and $R_5$ represent an alkyl group with 1 to 5 carbon atoms, a vinyl group or allyl group or a phenyl group, preferably a methyl or ethyl group and n represents zero or one, or wherein $R_4$ and/or $R_5$ represent a group $H[NH-(CH_2)_{m'}]_p-NH\ (CH_2)_m-$, whilst m and m′ represent a number from 1 to 6 and p represents zero or one or wherein $R_4$ and/or $R_5$ represent a group

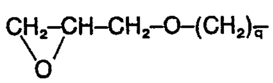 ,

wherein q represents a number from 1 to 6 or $R_4$, and/or $R_5$ represent a group

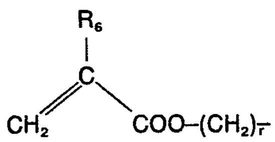 ,

wherein $R_6$ represents hydrogen or methyl and r represents a number from 1 to 6.

4. Coating agent as claimed in claims 1 to 3, characterised in that the partial hydrolysis of the organic silicon compounds is carried out in the presence of a non-cyclic alkanecarboxylic acid with 8 carbon atoms in the molecule.

5. Coating agent as claimed in claims 1 to 3, characterised in that the non-cyclic alkanecarboxylic acid with 8 carbon atoms in the molecule is added before storage.

6. Coating agent as claimed in claims 1 to 5, characterised in that for partial hydrolysis of the organic silicon compounds $\geqslant 0.5$ mol of water are used per mole of the group intended for hydrolysis.

7. Coating agent as claimed in claims 1 to 6, characterised in that the water content is from 5–20% by weight, preferably $13 \pm 2\%$ by weight.

8. Coating agents as claimed in claims 1 to 7, characterised in that they contain suitable organic solvents in quantities such that the solids content of the agents is about 15 to 35% by weight.

9. Use of the coating agents as claimed in claims 1 to 9 for coating acrylic resin plastics.

10. Use of the coating agents as claimed in claim 10 for coating polymethylmethacrylate.

11. Use of the coating agents as claimed in claims 1 to 9 for coating polycarbonate.

**Revendications**

1. Produit d'enduction aqueux à base de résine silicone pour surfaces de matière-plastique, possédant une stabilité au stockage améliorée, préparé par condensation de composés organo-silicés partiellement hydrolysés en présence d'acides, caractérisé en ce qu'il contient un acide alcanecarboxylique non cyclique à 8 atomes de carbone dans la molécule.

2. Produit d'enduction selon la revendication 1, caractérisé en ce que 0,01 à 1 mol, de préférence 0,05 à 0,2 mol de l'acide alcanecarboxylique non cyclique à 8 atomes de carbone dans la molécule est utilisée pour 1 mol du composé organosilicé utilisé.

3. Produit d'enduction selon la revendication 1 ou 2, caractérisé en ce qu'il est utilisé, en tant que composés organosilicés, des composés de formule I

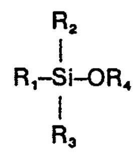 (I)

dans laquelle $R_1$, $R_2$ et $R_3$ sont mis, indépendamment les uns des autres, pour un radical $-(O)_nR_5$, $R_4$ et $R_5$ représentant chacun un radical alkyle à 1–5 atomes de carbone, un radical vinyle, un radical allyle ou un radical phényle, de préférence un radical méthyle ou éthyle, et n étant mis pour 0 ou 1, ou $R_4$ et/ou $R_5$ étant mis chacun pour un radical $H[NH-(CH_2)_{m'}]_p - NH\ (CH_2)_m$, m et m′ étant mis chacun pour un nombre de 1 à 6 et p pour 0 ou 1, ou $R_4$ et/ou $R_5$ étant mis pour un radical

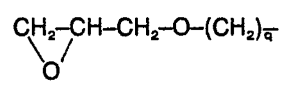 ,

q étant mis pour un nombre de 1 à 6, ou $R_4$ et/ou $R_5$ étant mis pour un radical

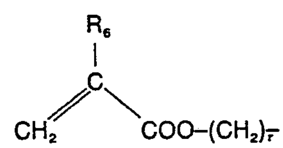 ,

$R_6$ représentant un atome d'hydrogène ou un radical méthyle et r un nombre de 1 à 6.

4. Produit d'enduction selon l'une quelconque des revendications 1 à 3, caractérisé en ce que l'hydrolyse partielle des composés organosilicés a été effectuée en présence d'un acide alcanecarboxylique non cyclique à 8 atomes de carbone dans la molécule.

5. Produit d'enduction selon l'une quelconque des revendications 1 à 3, caractérisé en ce que l'acide alcanecarboxylique non cyclique à 8 atomes de carbone dans la molécule est ajouté avant le stockage.

6. Produit d'enduction selon l'une quelconque des revendications 1 à 5, caractérisé en ce qu'il a été utilisé, pour l'hydrolyse partielle des composés organosilicés, $\geqslant$ 0,5 mol d'eau par mol du groupement prévu pour l'hydrolyse.

7. Produit d'enduction selon l'une quelconque des revendications 1 à 6, caractérisé en ce que sa teneur en eau est comprise 5 et 20% en poids, s'élevant de préférence à 13 $\pm$ 2% en poids.

8. Produit d'enduction selon l'une quelconque des revendications 1 à 7, caractérisé en ce qu'il contient des solvants organiques appropriés dans des proportions telles que la teneur en matières solides du produit soit comprise entre 15 et 35% en poids environ.

9. Utilisation du produit selon l'une quelconque des revendications 1 à 8 pour l'enduction de matières plastiques en résine acrylique.

10. Utilisation du produit d'enduction selon la revendication 9 pour l'enduction de polyméthacrylate de méthyle.

11. Utilisation du produit d'enduction selon l'une quelconque des revendications 1 à 8 pour l'enduction de polycarbonate.